# EUROPEAN PATENT APPLICATION

(11) **EP 4 514 047 A1**
(43) Date of publication of application: **26.02.2025**
(21) Application number: 22937888.0
(22) Date of filing: 21.04.2022
(51) Int. Cl.: H04W 74/08

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Gunzelmann, Rainer
(86) International application number: PCT/CN2022/088279
(87) International publication number: WO 2023/201652

(57) **Abstract**

Embodiments of the present disclosure are an information processing method and apparatus, a communication device and a storage medium. The information processing method executed by a terminal may comprise: determining a decision parameter according to an antenna structure of the terminal; and determining, according to the decision parameter and a measurement value of a downlink DL carrier, uplink transmission is performed on a primary uplink (UL) carrier or a secondary uplink (SUL) carrier.

## Description

### TECHNICAL FIELD

The present disclosure relates to, but not limited to, the field of wireless communication technology, in particular to an information processing method, an information processing apparatus, a communication device, and a storage medium.

### BACKGROUND

New Radio (NR) Supplementary Uplink (SUL) carrier refers to a supplementary Uplink (UL) carrier for an original carrier pair consisting of an uplink carrier and a downlink carrier. The UL carrier in the carrier pair may be called as primary UL carrier.

Generally, the SUL carrier is deployed at a low frequency. For example, for a carrier pair deployed at a frequency band of 3.5GHz, an SUL carrier of 800MHz is configured. The SUL carrier is presented mainly for extending uplink coverage, and increasing an uplink transmission performance for a power-limited region, e.g., a cell edge, through a low-frequency carrier. An uplink bandwidth of a non-SUL carrier is much greater than an uplink bandwidth of the SUL carrier.

In a case that air interface quality is relatively good, e.g., in a case that a terminal is located very close to a base station, the terminal uses the primary UL carrier to obtain a high rate.

In a case that the air interface quality becomes worse, due to a small path loss of the low-frequency carrier, the terminal uses the SUL carrier at a low frequency to obtain a better uplink transmission performance.

Due to a frequency difference between the non-SUL carrier (i.e., the primary UL carrier) and the SUL carrier, usually the terminal only operates on the primary UL carrier or the SUL carrier at a time.

### SUMMARY

The present disclosure provides in some embodiments an information processing method, an information processing apparatus, a communication device and a storage medium.

In a first aspect, the present disclosure provides in some embodiments an information processing method. The method is performed by a terminal, and includes: determining a decision parameter based on an antenna structure of the terminal; and determining an uplink transmission is performed on a primary UL carrier or an SUL carrier based on the decision parameter and a measurement value of a Downlink (DL) carrier.

In a second aspect, the present disclosure provides in some embodiments an information processing method. The method is performed by a base station, and includes: determining a decision parameter based on an antenna structure of a terminal; and transmitting a network signaling including the decision parameter. The decision parameter and a measurement value of a DL carrier are collectively used by the terminal to select to perform an uplink transmission on a primary UL carrier or an SUL carrier.

In a third aspect, the present disclosure provides in some embodiments an information processing apparatus, including: a first determination module, configured to determine a decision parameter based on an antenna structure of a terminal; and a determining module, configured to determine that an uplink transmission is performed on a primary UL carrier or an SUL carrier based on the decision parameter and a measurement value of a DL carrier.

In a fourth aspect, the present disclosure provides in some embodiments an information processing apparatus, including: a second determination module, configured to determine a decision parameter based on an antenna structure of a terminal; and a transmission module, configured to transmit a network signaling including the decision parameter. The decision parameter and a measurement value of a DL carrier are collectively used by the terminal to select to perform an uplink transmission on a primary UL carrier or an SUL carrier.

In a fifth aspect, the present disclosure provides in some embodiments a communication device, including a processor, a transceiver, a memory, and an executable program stored in the memory and executed by the processor. The processor is configured to execute the executable program to implement the above-mentioned information processing method in the first aspect or the second aspect.

In a sixth aspect, the present disclosure provides in some embodiments a computer storage medium storing therein an executable program. The executable program is executed by a processor to implement the above-mentioned information processing method in the first aspect or the second aspect.

According to the technical solutions provided in the embodiments of the present disclosure, on one hand, the decision parameter determined based on the antenna structure of the terminal is used by the terminal to select to perform the uplink transmission on the primary UL carrier or the SUL carrier, so that the terminals with different antenna structures have an approximately same chance to perform the uplink transmission. On the other hand, by flexibly configuring the decision parameter, it is able to achieve load balancing between different carriers or reduce the handover of the terminal between the UL carriers, thereby to reduce a transmission delay.

It should be appreciated that, the above-mentioned general description and the following detailed description are for illustrative and explanatory purposes, but shall not be used to limit the embodiments of the present disclosure.

### BRIEF DESCRIPTION OF THE DRAWINGS

The drawings herein are incorporated into, and constitute a part of, the specification, show the embodiments of the present disclosure, and are used to explain a principle of the embodiments of the present disclosure together with the specification.
FIG. 1 is a schematic view showing a wireless communication system according to one exemplary embodiment of the present disclosure;
FIG. 2 is a flow chart of an information processing method according to one exemplary embodiment of the present disclosure;
FIG. 3 is a flow chart of the information processing method according to one exemplary embodiment of the present disclosure;
FIG. 4 is a flow chart of the information processing method according to one exemplary embodiment of the present disclosure;
FIG. 5 is a flow chart of the information processing method according to one exemplary embodiment of the present disclosure;
FIG. 6 is a flow chart of the information processing method according to one exemplary embodiment of the present disclosure;
FIG. 7 is a schematic view showing an information processing apparatus according to one exemplary embodiment of the present disclosure;
FIG. 8 is a schematic view showing an information processing apparatus according to one exemplary embodiment of the present disclosure;
FIG. 9 is a schematic view showing a terminal according to one exemplary embodiment of the present disclosure; and
FIG. 10 is a schematic view showing a communication device according to one exemplary embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are only examples of devices and methods consistent with some aspects of the embodiments of the present disclosure.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are only used to differentiate the information of a same type from each other. For example, without departing from the scope of the present disclosure, first information may also be called as second information, and similarly second information may also be called as first information. Depending on the context, such a word as "if" may be construed as "when ...", "in the case that ... " or "in response to determining that ... ".

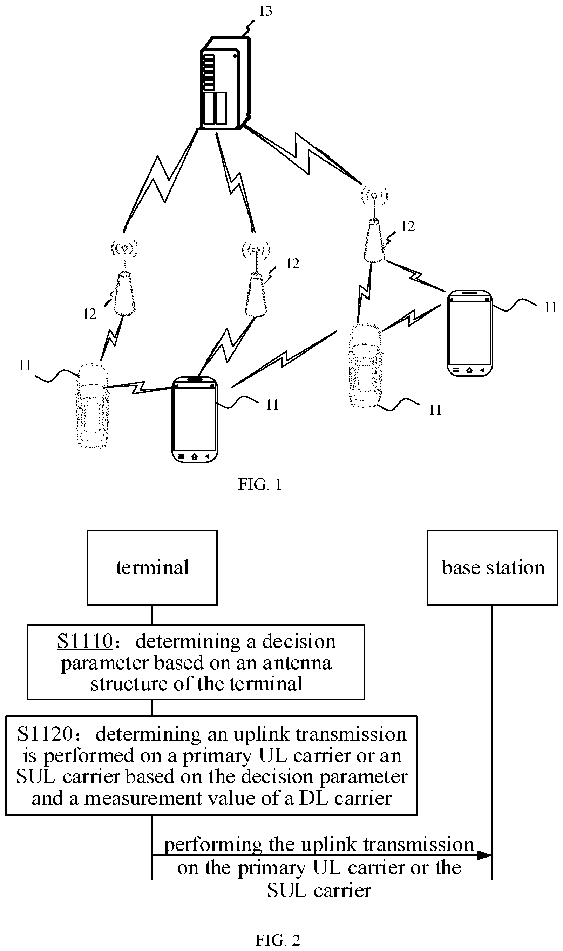

FIG. 1 is a schematic view showing a wireless communication system according to the embodiments of the present disclosure. As shown in FIG. 1, the wireless communication system is a communication system based on a cellular mobile communication technology, and it includes several UEs 11 and several access devices 12.

The UE 11 may be a device for providing voice and/or data connectivity to a user. The UE 11 may communicate with one or more core networks via a Radio Access Network (RAN). The UE 11 may be an Internet of Things (IoT) UE, e.g., a sensor device or a mobile phone (also called as cellular phone), or a computer having the IoT UE, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal, a user agent, a user device or a user UE. The UE 11 may also be a device for an unmanned aerial vehicle. The UE 11 may also be a vehicle-mounted device, e.g., an electronic control unit having a wireless communication function, or a wireless terminal coupled to an external electronic control unit. Alternatively, the UE 11 may also be a roadside device, e.g., a street lamp or a signal lamp having a wireless communication function, or any other roadside devices.

The access device 12 may be a network device in a wireless communication system. The wireless communication system may be a 4th-Generation (4G) communication system, also called as Long-Term Evolution (LTE) system, or a 5th-Generation (5G) system, also called as New Radio (NR) system or 5G NR system. Alternatively, the wireless communication system may also be a next-generation system of the 5G system. An access network in the 5G system may be called as a New Generation-Radio Access Network (NG-RAN) or an MTC system.

The access device 12 may be an evolved Node B (eNB) used in the 4G system, or an access device (gNB) with centralized/distributed architecture in the 5G system. In a case that the access device 12 has the centralized/distributed architecture, usually it includes a Central Unit (CU) and at least two Distributed Units (DUs). The CU is provided with a protocol stack for a Packet Data Convergence Protocol (PDCP) layer, a Radio Link Control (RLC) layer and a Media Access Control (MAC) layer. The DU is provided with a protocol stack for a Physical (PHY) layer. In the embodiments of the present disclosure, a specific implementation mode of the access device 12 will not be particularly defined.

A wireless connection is established between the access device 12 and the UE 11 through a wireless air interface. In different implementation modes, the wireless air interface is a wireless air interface based on a standard of a 4G mobile communication network technology; or the wireless air interface is a wireless air interface based on a standard of a 5G mobile communication network technology, e.g., a new air interface; or the wireless air interface is a wireless air interface based on a standard of a mobile communication network technology next to the 5G mobile communication network technology.

As shown in FIG. 2, the present disclosure provides in some embodiments an information processing method performed by a terminal, which includes the following steps.

S1110: a decision parameter is determined based on an antenna structure of the terminal.

S1120: an uplink transmission to be performed on a primary UL carrier or an SUL carrier is determined based on the decision parameter and a measurement value of a DL carrier.

The primary UL carrier is a UL carrier paired with a DL carrier on which a Synchronization Signal Block (SSB) is currently received by the terminal.

The SUL carrier is a supplementary carrier of the primary UL carrier, and it is not paired with the DL carrier on which the SSB is currently received by the terminal. Usually, the SUL carrier has a frequency lower than the primary UL carrier.

The measurement value of the DL carrier includes, but not limited to, Reference Signal Receiving Power (RSRP) or Reference Signal Received Quality (RSRQ).

The information processing method may be performed by terminals of different types. The terminals of different types may have different antenna structures, or the terminals of a same type may also have different antenna structures.

For example, in a case that a terminal operates at different frequencies, its antenna structures in an operating state may also be different.

Presumed that the terminal is a Reduced Capability (RedCap) terminal or an eRedCap terminal, in a case that the terminal operates within a Frequency Range (FR) 1, the terminal may include only one reception antenna in an operating state. In a case that the terminal operates within an FR 2, the terminal may include two antennae in the operating state, and it may be provided with a plurality of antenna panels. In this way, for the terminal with different reception antenna structures, even at a same position, the measurement values of a same DL carrier are different. With respect to this difference, in the embodiments of the present disclosure, the decision parameter is determined based on the antenna structure of the terminal.

In the embodiments of the present disclosure, the decision parameter is determined based on the antenna structure of the terminal in the operating state. The decision parameter is used by the terminal to select the primary UL carrier or the SUL carrier to communicate with a base station.

The terminal measures the DL carrier through the reception antenna to obtain the above-mentioned RSRP measurement value and/or RSRQ measurement value. To be specific, the decision parameter and the measurement value of the DL carrier are collectively used by the terminal to select the UL carrier for the uplink transmission, and the UL carrier for the uplink transmission is the SUL carrier or the primary UL carrier.

The DL carrier is a carrier which forms a carrier pair with the UL carrier. The DL carrier and the UL carrier belong to a same carrier pair, so transmission attenuation of the carriers in a space is similar, and thereby the measurement value of the DL carrier is used to measure signal quality for the uplink transmission on the UL carrier selected by the UE. Hence, in the embodiments of the present disclosure, the primary UL carrier or the SUL carrier for an uplink transmission is selected based on the decision parameter and the measurement value of the DL carrier.

For example, in a case that the signal quality of the DL carrier is determined as not good based on the decision parameter and the measurement value of the DL carrier, the SUL carrier is selected for an uplink transmission, and/or in a case that the signal quality of the DL carrier is determined as good based on the decision parameter and the measurement value of the DL carrier, the UL carrier is selected for an uplink transmission.

Whether the signal quality is good or not good is determined based on a criteria which corresponds to the decision parameter and the measurement value of the DL carrier and which is used by the terminal for performing an uplink transmission on the primary UL carrier. In other words, in a case that the signal quality of the primary UL carrier is determined to meet the criteria for performing, by the terminal, data transmission based on the decision parameter and the measurement value of the DL carrier, it may be considered that the signal quality of the DL carrier is good; otherwise, the signal quality of the DL carrier is not good. For example, the decision parameter includes an RSRP threshold, and in a case that the RSRP measurement value of the DL carrier is greater than the threshold, it may be considered that the measurement value of the current DL carrier for the terminal meets the criteria for performing an uplink transmission on the primary UL carrier.

On one hand, the decision parameter determined based on the antenna structure of the terminal is used by the terminal to select the primary UL carrier or the SUL carrier for the uplink transmission, so the terminals with different antenna structures have an approximately same chance to perform the uplink transmission.

On the other hand, by flexibly configuring the decision parameter, it is able to achieve load balancing between different carriers, or reduce the handover of the terminal between different UL carriers, thereby to reduce a transmission delay.

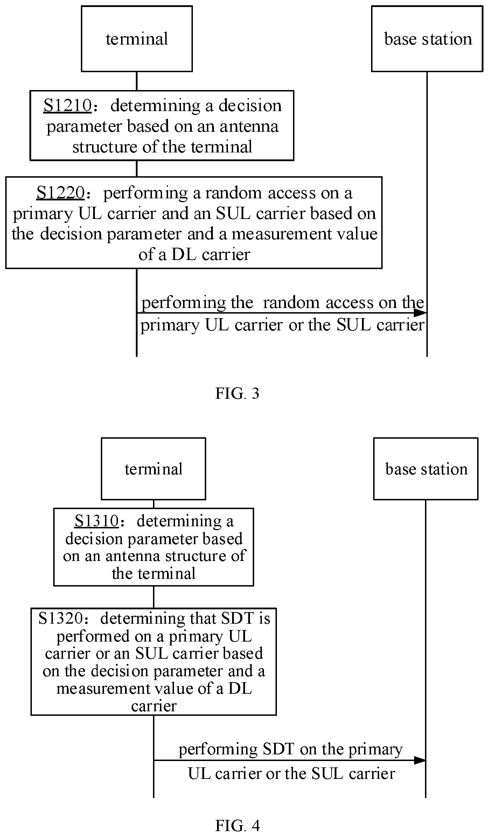

As shown in FIG. 3, the present disclosure provides in some embodiments an information processing method performed by a terminal, which includes the following steps.

S1210: a decision parameter is determined based on an antenna structure of the terminal.

S1220: a random access to be performed on a primary UL carrier or an SUL carrier is determined based on the decision parameter and a measurement value of a DL carrier.

Based on the decision parameter and the measurement value of the DL carrier, the terminal selects to perform the random access on the primary UL carrier or the SUL carrier. For example, the random access includes 2-step random access and/or 4-step random access.

As shown in FIG. 4, the present disclosure provides in some embodiments an information processing method performed by a terminal, which includes the following steps.

S1310: a decision parameter is determined based on an antenna structure of the terminal.

S1320: small data transmission (SDT) is performed on a UL carrier and an SUL carrier based on the decision parameter and a measurement value of a DL carrier. The SDT is a kind of specific data transmission, and usually it refers to the uploading of data through such a message as random access request in a case that a connection is not established between the terminal and a network side. For example, a random access message A carrying a small amount of data is sent on a Random Occasion (RO) in the 2-step random access, and the data carried in the random access message A is just the transmitted small data.

The uplink transmission has been illustratively described hereinabove, and during the specific implementation, the uplink transmission is not limited to these examples.

In some embodiments of the present disclosure, the determining the decision parameter based on the antenna structure of the terminal includes: in a case that the antenna structure of the terminal is a first type of antenna structure, determining that the decision parameter includes a first threshold and a measurement correction factor, the measurement correction factor being used to correct the measurement value of the DL carrier for the terminal; and in a case that the antenna structure of the terminal is a second type of antenna structure, determining that the decision parameter includes the first threshold. The first threshold is a shared threshold between the terminal with the first type of antenna structure and the terminal with the second type of antenna structure.

In the embodiment of the present disclosure, the terminals with different antenna structures share a same measurement threshold, but the terminal with the first type of antenna structure is further provided with the measurement correction factor. The measurement correction factor is used to adjust the measurement value of the DL carrier to obtain a corrected value. Then, the corrected value is compared with the first threshold to obtain a comparison result. The uplink transmission is selected to be performed on the primary UL carrier or the SUL carrier based on the comparison result.

In another embodiment of the present disclosure, both the first type of antenna structure and the second type of antenna structure are configured with the measurement correction factors, but the corrected values corresponding to the two measurement correction factors are different.

The measurement correction factor includes a coefficient factor and/or an offset factor.

The coefficient factor is multiplied by the measurement value of the DL carrier to obtain the corrected value which is compared with the first threshold.

The offset factor is used to correct the measurement value of the DL carrier through an addition or subtraction operation to obtain the corrected value.

The first type of antenna structure may include one or two reception antennae, and the second type of antenna structure may include two or more reception antennae. Quantities of antenna elements in antenna panels for a plurality of antennae in the second type of antenna structure may be the same or different. In a case that a quantity of antennae included in the first type of antenna structure is the same as a quantity of antennae included in the second type of antenna structure, usually a single antenna panel in the second type of antenna structure includes more antenna elements.

In a word, the first type of antenna structure is different from the second type of antenna structure. In the embodiments of the present disclosure, the decision parameter configured based on the antenna structure may include the first threshold individually, or include both the measurement correction factor and the first threshold, so as to adaptively configure the decision parameter based on the antenna structure, thereby to achieve the load balancing between different carriers and/or reduce the uplink transmission delay.

By introducing the measurement correction factor, it is able to compensate for the measurement value of the DL carrier for the first type of antenna structure with fewer reception antennae or fewer antenna elements.

In some embodiments of the present disclosure, in a case that the antenna structure of the terminal is the first type of antenna structure, the determining that the uplink transmission is performed on the primary UL carrier or the SUL carrier based on the decision parameter and the measurement value of the DL carrier includes: obtaining a corrected value of the DL carrier based on the measurement correction factor and the measurement value of the DL carrier; in a case that the corrected value of the DL carrier is greater than or equal to the first threshold, determining that the uplink transmission is performed on the primary UL carrier; and in a case that the corrected value of the DL carrier is smaller than the first threshold, determining that the uplink transmission is performed on the SUL carrier.

In a case that the corrected value of the DL carrier is greater than or equal to the first threshold, it may be considered that the signal quality of the current DL carrier meets the criteria for performing, by the terminal, the uplink transmission on the primary UL carrier, and uplink transmission is performed preferentially on the UL carrier. Hence, the terminal may rapidly perform uplink transmission using the UL carrier without switching an operating frequency of an antenna. In a case that the corrected value of the DL carrier is smaller than the first threshold, it may be considered that the signal quality of the current DL carrier does not meet the criteria for performing, by the terminal, the uplink transmission on the primary UL carrier, and uplink transmission is performed preferentially on the SUL carrier. In this regard, after a transmission antenna of the terminal has been switched to a frequency where the SUL carrier is located, the uplink transmission is performed, so as to ensure the transmission quality of the uplink transmission via the SUL carrier.

In some embodiments of the present disclosure, the measurement correction factor includes a first type of correction factor and a second type of correction factor.

The first type of correction factor is used for correcting the measurement value of the DL carrier for random access and SDT.

The first type of correction factor is a shared correction factor, i.e., a correction factor used no matter which kind of uplink transmission is performed by the terminal. For example, the first type of correction factor is used by the terminal for both random access and SDT.

The second type of correction factor is used for correcting the measurement value of the DL carrier for random access or SDT.

The second type of correction factor is an independent correction factor, i.e., different correction factors are configured for different kinds of uplink transmission. At this time, values of the correction factors for different kinds of uplink transmission may be the same or different. In a case that the measurement factor is the second type of correction factor, different values of the correction factors may be configured based on transmission characteristics of different kinds of uplink transmission, so as to meet the transmission requirements on different kinds of uplink transmission.

In some embodiments of the present disclosure, in a case that the antenna structure of the terminal is the second type of antenna structure, the determining that the uplink transmission is performed on the primary UL carrier or the SUL carrier based on the decision parameter and the measurement value of the DL carrier includes: in a case that the measurement value of the DL carrier is greater than or equal to the first threshold, determining that the uplink transmission is performed on the primary UL carrier; and in a case that the measurement value of the DL carrier is smaller than the first threshold, determining that the uplink transmission is performed on the SUL carrier.

In the embodiments of the present disclosure, in a case that the antenna structure of the terminal is the second type of antenna structure, the decision parameter may only include the first threshold. The measurement value of the DL carrier is directly compared with the first threshold. In a case that the measurement value of the DL carrier is greater than or equal to the first threshold, it means that the signal quality of the DL carrier meets the criteria for performing, by the terminal, the uplink transmission on the primary UL carrier. Otherwise, it may be considered that the signal quality of the DL carrier does not meet the criteria for performing, by the terminal, the uplink transmission on the primary UL carrier.

In a case that the signal quality of the DL carrier meets the criteria for performing, by the terminal, the uplink transmission on the primary UL carrier, the terminal may perform the uplink transmission on the UL carrier without switching the operating frequency of the antenna. In a case that the signal quality of the DL carrier does not meet the criteria for performing, by the terminal, the uplink transmission on the primary UL carrier, the terminal at least needs to switch the operating frequency of the transmission antenna, so as to perform the uplink transmission on the SUL carrier.

In some embodiments of the present disclosure, the determining the decision parameter based on the antenna structure of the terminal includes: in a case that the antenna structure of the terminal is a first type of antenna structure, determining that the decision parameter includes a second threshold; and in a case that the antenna structure of the antenna is a second type of antenna structure, determining that the decision parameter includes a third threshold.

In the embodiments of the present disclosure, different thresholds are directly used by the first type of antenna structure and the second type of antenna structure.

For example, the second threshold is smaller than the first threshold.

In a case that the antenna structure of the terminal is the first type of antenna structure, a smaller threshold is used to determine whether or not the signal quality of the DL carrier meets the criteria for performing, by the terminal, the uplink transmission on the primary UL carrier.

In some embodiments of the present disclosure, in a case that the antenna structure of the terminal is the first type of antenna structure, the determining that the uplink transmission is performed on the primary UL carrier or the SUL carrier based on the decision parameter and the measurement value of the DL carrier includes: in a case that the measurement value of the DL carrier is greater than or equal to the second threshold, determining that the uplink transmission is performed on the primary UL carrier; and in a case that the measurement value of the DL carrier is smaller than the second threshold, determining that the uplink transmission is performed on the SUL carrier.

For the terminal with the first type of antenna structure, in a case that the measurement value of the DL carrier is not smaller than the second threshold, it means that the signal quality of the DL carrier meets the criteria for performing, by the terminal, the uplink transmission on the primary UL carrier, and the uplink transmission is performed preferentially on the UL carrier. Here, in a case that the UL carrier is selected for the uplink transmission, it means that the uplink transmission is sent on the UL carrier.

For the terminal with the first type of antenna structure, in a case that the measurement value of the DL carrier is smaller than the second threshold, it means that the signal quality of the DL carrier does not meet the criteria for performing, by the terminal, the uplink transmission on the primary UL carrier. At this time, the signal quality of the UL carrier is probably not good enough, so the uplink transmission is selected to be sent on the SUL carrier.

In some embodiments of the present disclosure, in a case that the antenna structure of the terminal is the second type of antenna structure, the determining that the uplink transmission is performed on the primary UL carrier or the SUL carrier based on the decision parameter and the measurement value of the DL carrier includes: in a case that the measurement value of the DL carrier is greater than or equal to the third threshold, determining that the uplink transmission is performed on the primary UL carrier or the SUL carrier; and in a case that the measurement value of the DL carrier is smaller than the third threshold, determining that the uplink transmission is performed on the SUL carrier.

For the terminal with the second type of antenna structure, in a case that the measurement value of the DL carrier is not smaller than the third threshold, it means that the signal quality of the DL carrier meets the criteria for performing, by the terminal, the uplink transmission on the primary UL carrier, and the uplink transmission is performed preferentially on the UL carrier. Here, in a case that the UL carrier is selected for the uplink transmission, it means that the uplink transmission is sent on the UL carrier.

For the terminal with the second type of antenna structure, in a case that the measurement value of the DL carrier is smaller than the third threshold, it means that the signal quality of the DL carrier does not meet the criteria for performing, by the terminal, the uplink transmission on the primary UL carrier. At this time, the signal quality of the UL carrier is probably not good enough, so the uplink transmission is selected to be sent on the SUL carrier.

In some embodiments of the present disclosure, the determining the decision parameter based on the antenna structure of the terminal includes: in a case that the antenna structure of the terminal is a first type of antenna structure, determining that the decision parameter includes a fourth threshold and a first threshold correction factor, the first threshold correction factor being used to correct the fourth threshold for the terminal with the first type of antenna structure; and in a case that the antenna structure of the terminal is a second type of antenna structure, determining that the decision parameter includes the fourth threshold and a second threshold correction factor, the second threshold correction factor being used to correct the fourth threshold for the terminal with the second type of antenna structure.

In some embodiments of the present disclosure, the decision parameter includes the fourth threshold and the threshold correction factor for correcting the fourth threshold. After the fourth threshold has been corrected, a corrected threshold is obtained. The threshold correction factor includes the above-mentioned first threshold correction factor and second threshold correction factor.

For example, a value of the threshold correction factor may be any real number.

The threshold correction factor may be a coefficient factor and/or an offset factor.

The coefficient factor is multiplied by the fourth threshold to obtain the corrected fourth threshold. At this time, the coefficient factor is usually a real number within a range of 0 to 1.

An addition or subtraction operation may be performed on the offset factor and the fourth threshold. For example, the offset factor is a positive number, and the subtraction operation may be performed on the fourth threshold and the offset factor to obtain the corrected fourth threshold. The addition operation may be performed on the offset factor and the fourth threshold. For example, the offset factor is a negative number, and the fourth threshold is added with the offset factor to obtain the corrected fourth threshold.

In some embodiments of the present disclosure, a correction range of the first threshold correction factor for the fourth threshold is greater than a correction range of the second threshold correction factor for the fourth threshold.

In a word, the corrected threshold is compared with the measurement value of the DL carrier, so that the terminal selects the primary UL carrier or the SUL carrier for uplink transmission.

In some embodiments of the present disclosure, the first threshold correction factor is independent of the second threshold correction factor, and a value of the first threshold correction factor is the same as, or different from, a value of the second threshold correction factor.

In some embodiments of the present disclosure, in a case that the antenna structure of the terminal is the first type of antenna structure, the determining that the uplink transmission is performed on the primary UL carrier or the SUL carrier based on the decision parameter and the measurement value of the DL carrier includes: obtaining a first threshold corrected value based on the fourth threshold and the first threshold correction factor; in a case that the measurement value of the DL carrier is greater than or equal to the first threshold corrected value, determining that the uplink transmission is performed on the primary UL carrier; and in a case that the measurement value of the DL carrier is smaller than the first threshold corrected value, determining that the uplink transmission is performed on the SUL carrier.

Here, the first threshold corrected value is obtained by correcting the fourth threshold using the first threshold correction factor.

For the terminal with the first type of antenna structure, in a case that the measurement value of the DL carrier is greater than or equal to the first threshold corrected value, it means that the signal quality of the DL carrier meets the criteria for performing, by the terminal, the uplink transmission on the primary UL carrier; otherwise, it may be considered that the signal quality of the DL carrier does not meet the criteria for performing, by the terminal, the uplink transmission on the primary UL carrier.

In some embodiments of the present disclosure, in a case that the antenna structure of the terminal is the second type of antenna structure, the determining that the uplink transmission is performed on the primary UL carrier or the SUL carrier based on the decision parameter and the measurement value of the DL carrier includes: obtaining a second threshold corrected value based on the fourth threshold and the second threshold correction actor; in a case that the measurement value of the DL carrier is greater than or equal to the second threshold corrected value, determining that the uplink transmission is performed on the primary UL carrier; and in a case that the measurement value of the DL carrier is smaller than the second threshold corrected value, determining that the uplink transmission is performed on the SUL carrier.

Here, the second threshold corrected value is obtained by correcting the fourth threshold using the second threshold correction factor.

For the terminal with the second type of antenna structure, in a case that the measurement value of the DL carrier is greater than or equal to the second threshold corrected value, it means that the signal quality of the DL carrier meets the criteria for performing, by the terminal, the uplink transmission on the primary UL carrier; otherwise, it may be considered that the signal quality of the DL carrier does not meet the criteria for performing, by the terminal, the uplink transmission on the primary UL carrier
In some embodiments of the present disclosure, the determining the decision parameter based on the antenna structure of the terminal includes determining the decision parameter based on the antenna structure of the terminal and an agreement in a protocol.

In one embodiment of the present disclosure, the terminals with different antenna structures have different decision parameters. The decision parameters corresponding to different antenna structures are agreed in a communication protocol, so the terminal may determine the decision parameter based on the agreement in the protocol.

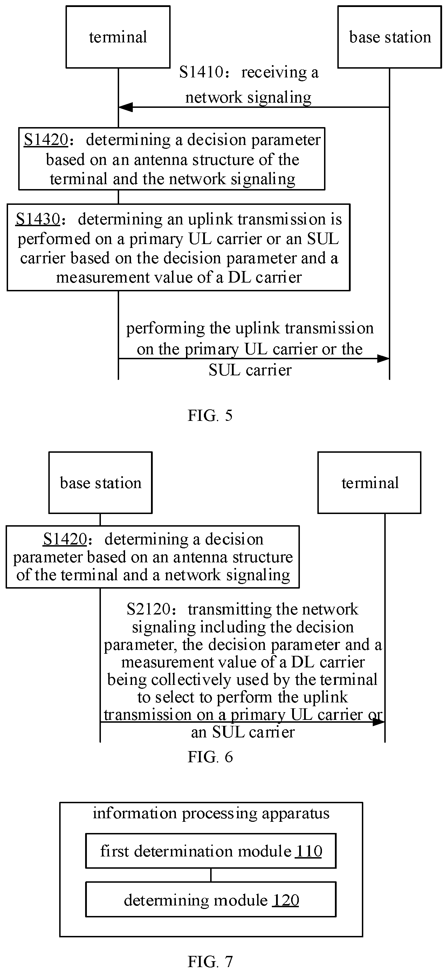

As shown in FIG. 5, the present disclosure provides in some embodiments an information processing method performed by a terminal, which includes the following steps.

S1410: a network signaling is received.

S1420: a decision parameter is determined based on an antenna structure of the terminal and the network signaling.

S1430: an uplink transmission is performed on a primary UL carrier or an SUL carrier based on the decision parameter and a measurement value of a DL carrier.

In another embodiment of the present disclosure, a correspondence between the antenna structure and the decision parameter is indicated through the network signaling. For example, the network signaling includes, but not limited to, Radio Resource Control (RRC) signaling and/or Media Access Control (MAC) layer signaling sent by a base station. The MAC layer signaling includes, but not limited to, an MAC Control Element (CE).

In some embodiments of the present disclosure, a quantity of reception antennae in the first type of antenna structure is smaller than a quantity of reception antennae in the second type of antenna structure; and/or a quantity of antenna elements in a single antenna panel in the first type of antenna structure is smaller than a quantity of antenna elements in a single antenna panel in the second type of antenna structure.

In a case that there are more reception antennae, it is more likely to obtain the measurement value of the DL carrier. In a case that there are more antenna elements included in a single antenna panel, it is more likely to obtain the measurement value of the DL carrier. The measurement value includes, but not limited to, RSRP and/or RSRQ.

For example, the terminal with the first type of antenna structure includes a RedCap terminal. The RedCap terminal may further be an enhanced RedCap (eRedCaP) terminal.

The terminal with the first type of antenna structure may be a terminal having one reception antenna in a case that the operating frequency is FR1, and/or a terminal having fewer antenna panels in a case that the operating frequency is FR2.

The terminal with the second type of antenna structure is different from the terminal with the first type of antenna structure.

The terminal with the second type of antenna structure is a normal terminal. The normal terminal includes, but not limited to, an enhanced Mobile Broadband (eMBB) terminal, or a RedCap terminal having a same antenna structure as the normal terminal.

Usually, the terminal with the second type of antenna structure includes a plurality of antennae, each antenna includes one or more antenna panels, and each antenna panel includes one or more antenna elements.

The above is only the illustrative description about the terminals with the first type of antenna structure and the second type of antenna structure, and during the specific implementation, the terminal is not limited thereto.

As shown in FIG. 6, the present disclosure provides in some embodiments an information processing method performed by a base station, which includes the following steps.

S2110: a decision parameter is determined based on an antenna structure of a terminal.

S2120: a network signaling including the decision parameter is sent. The decision parameter and a measurement value of the DL carrier are collectively used by the terminal to select to perform an uplink transmission on a primary UL carrier or an SUL carrier.

In the embodiments of the present disclosure, the method is performed by the base station. The base station includes, but not limited to, an eNB and/or a gNB.

In the embodiments of the present disclosure, the decision parameter is determined based on the antenna structure of the terminal, and then the determined decision parameter is carried in the network signaling and sent to the terminal.

The antenna structure includes, but not limited to, a reception antenna structure of the terminal.

For example, the network signaling includes an RRC signaling and/or an MAC layer signaling.

For another example, the network signaling is a broadcast signaling.

In some embodiments of the present disclosure, the uplink transmission includes random access and/or SDT.

In a case that the decision parameter is determined as mentioned hereinabove so that the terminal selects the UL carrier or the SUL carrier for the uplink transmission, there are the following beneficial effects.

On one hand, the decision parameter determined based on the antenna structure of the terminal is used by the terminal to select the primary UL carrier or the SUL carrier to perform the uplink transmission, so the terminals with different antenna structures have an approximately same chance to perform the uplink transmission.

On the other hand, by flexibly configuring the decision parameter, it is able to achieve the load balancing between different carriers and reduce the handover of the terminal between the UL carriers, thereby to reduce the transmission delay.

In some embodiments of the present disclosure, the antenna structure includes a first type of antenna structure and/or a second type of antenna structure.

For example, a quantity of reception antennae in the first type of antenna structure is smaller than a quantity of reception antennae in the second type of antenna structure; and/or a quantity of antenna elements in a single antenna panel in the first type of antenna structure is smaller than a quantity of antenna elements in a single antenna panel in the second type of antenna structure.

In a case that there are more reception antennae, it is more likely to obtain the measurement value of the DL carrier. In a case that there are more antenna elements included in a single antenna panel, it is more likely to obtain the measurement value of the DL carrier. The measurement value includes, but not limited to, RSRP and/or RSRQ. In this regard, through the decision parameter matching the antenna structure, the terminals with different antenna structures have an approximately same chance to perform the uplink transmission. In addition, through flexibly configuring the decision parameter, it is able to achieve load balancing between different carriers or reduce the handover of the terminal between the UL carriers, thereby to reduce the transmission delay.

In one embodiment of the present disclosure, the information processing method includes obtaining, by a terminal, an RSRP threshold related to a use procedure of an SUL carrier. The threshold is shared by all terminals.

In response to determining that the terminal is a terminal with a first type of antenna structure, the terminal corrects an RSRP measurement value obtained through measuring a DL carrier, and a corrected RSRP value is a compared with the RSRP threshold, and then whether or not to use the SUL carrier for the uplink transmission is determined based on a comparison result.

In a first optional mode, whether or not to use the SUL carrier for the uplink transmission is determined based on the corrected RSRP value in a Random Access Channel (RACH) procedure and/or an SDT procedure.

In a second optional mode, as configured by the network or predefined in the protocol, whether or not to use the SUL carrier for the uplink transmission is determined based on the corrected RSRP value only in the RACH procedure or the SDT procedure, and whether or not to use the SUL carrier for the uplink transmission is determined still based on a real RSRP measurement value in the other scenarios.

As a correction mode, the real RSRP value obtained through measurement is added with one offset value, and the offset value is predefined in the protocol or notified via a high-layer signaling.

For example, the offset values used in the RACH procedure and the SDT procedure are the same.

For another example, the offset values used in the RACH procedure and the SDT procedure are different.

The first type of antenna structure includes only one reception antenna in the FR1, and in the FR2, a quantity of antenna elements included in one antenna panel is smaller than a quantity of antenna elements include in an antenna panel for a normal NR terminal.

In one embodiment of the present disclosure, the information processing method further includes configuring different RSRP thresholds for the terminals with different antenna structures.

For example, different RSRP thresholds are configured for the terminals with different antenna structures in both the RACH procedure and the SDT procedure.

Further, as configured by the network or predefined in the protocol, the RSRP thresholds are configured for different antenna structures only in the RACH procedure or the SDT procedure, and a same RSRP threshold is still used for determination in the other uplink transmission scenarios.

In one embodiment of the present disclosure, the information processing method further includes setting different RSRP threshold correction factors for the terminals with different antenna structures.

The correction factor is predefined in the protocol or configured by the network.

In a case that the operating frequency is the FR1, the first type of antenna structure only includes one reception antenna, and/or in a case that the operating frequency is the FR2, a quantity of antenna elements included in a single antenna panel is smaller than a quantity of antenna elements included in a single antenna panel of a normal NR terminal.

According to the information processing method in the embodiments of the present disclosure, the configuration of the RSRP threshold selected for the SUL carrier and the UL carrier in the RACH procedure is enhanced. On one hand, the more flexible configuration is supported to achieve the load balancing between the UL carrier and the SUL carrier. On the other hand, by reducing the unnecessary handover between the UL carrier and the SUL carrier, it is able to reduce the uplink transmission delay of the terminal.

As shown in FIG. 7, the present disclosure provides in some embodiments an information processing apparatus, which includes a first determination module 110 and a determining module 120.

The first determination module 110 is configured to determine a decision parameter based on an antenna structure of a terminal.

The determining module 120 is configured to determine an uplink transmission is performed on a primary UL carrier or an SUL carrier based on the decision parameter and a measurement value of a DL carrier.

The information processing apparatus may be included in the terminal.

In some embodiments of the present disclosure, the first determination module 110 and the determining module 120 may be program modules. The program module is executed by a processor to implement the above-mentioned operations.

In some other embodiments of the present disclosure, the first determination module 110 and the determining module 120 may be a hardware-and-software module. The hardware-and-software module includes, but not limited to, a programmable array. The programmable array includes, but not limited to, a field programmable array and/or a complex programmable array.

In some other embodiments of the present disclosure, the first determination module 110 and the determining module 120 may be a pure hardware module, which includes, but not limited to, an application-specific integrated circuit.

In some embodiments of the present disclosure, the determining module 120 is configured to: determine that a random access is performed on the primary UL carrier or the SUL carrier based on the decision parameter and the measurement value of the DL carrier, or determine that SDT is performed on the primary UL carrier or the SUL carrier based on the decision parameter and the measurement value of the DL carrier.

In some embodiments of the present disclosure, the first determination module 110 is configured to: in a case that the antenna structure of the terminal is a first type of antenna structure, determine that the decision parameter includes a first threshold and a measurement correction factor, the measurement correction factor being used to correct the measurement value of the DL carrier for the terminal; and in a case that the antenna structure of the terminal is a second type of antenna structure, determine that the decision parameter includes the first threshold. The first threshold is a shared threshold between the terminal with the first type of antenna structure and the terminal with the second type of antenna structure.

In some embodiments of the present disclosure, in a case that the antenna structure of the terminal is the first type of antenna structure, the determining module 120 is configured to: obtain a corrected value of the DL carrier based on the measurement correction factor and the measurement value of the DL carrier; in a case that the corrected value of the DL carrier is greater than or equal to the first threshold, determine that the uplink transmission is performed on the primary UL carrier; and in a case that the corrected value of the DL carrier is smaller than the first threshold, determine that the uplink transmission is performed on the SUL carrier.

In some embodiments of the present disclosure, the measurement correction factor includes: a first type of correction factor for correcting the measurement value of the DL carrier for random access and SDT; and a second type of correction factor for correcting the measurement value of the DL carrier for random access or SDT.

In some embodiments of the present disclosure, in a case that the antenna structure of the terminal is the second type of antenna structure, the determining module 120 is configured to: in a case that the measurement value of the DL carrier is greater than or equal to the first threshold, determine that the uplink transmission is performed on the primary UL carrier; and in a case that the measurement value of the DL carrier is smaller than the first threshold, determine that the uplink transmission is performed on the SUL carrier.

In some embodiments of the present disclosure, the first determination module 110 is configured to: in a case that the antenna structure of the terminal is a first type of antenna structure, determine that the decision parameter includes a second threshold; and in a case that the antenna structure of the antenna is a second type of antenna structure, determine that the decision parameter includes a third threshold.

In some embodiments of the present disclosure, in a case that the antenna structure of the terminal is the first type of antenna structure, the determining module 120 is configured to: in a case that the measurement value of the DL carrier is greater than or equal to the second threshold, determine that the uplink transmission is performed on the primary UL carrier; and in a case that the measurement value of the DL carrier is smaller than the second threshold, determine that the uplink transmission is performed on the SUL carrier.

In some embodiments of the present disclosure, in a case that the antenna structure of the terminal is the second type of antenna structure, the determining module 120 is configured to: in a case that the measurement value of the DL carrier is greater than or equal to the third threshold, determine that the uplink transmission is performed on the primary UL carrier or the SUL carrier; and in a case that the measurement value of the DL carrier is smaller than the third threshold, determine that the uplink transmission is performed on the SUL carrier.

In some embodiments of the present disclosure, the first determination module 110 is configured to: in a case that the antenna structure of the terminal is a first type of antenna structure, determine that the decision parameter includes a fourth threshold and a first threshold correction factor, the first threshold correction factor being used to correct the fourth threshold for the terminal with the first type of antenna structure; and in a case that the antenna structure of the terminal is a second type of antenna structure, determine that the decision parameter includes the fourth threshold and a second threshold correction factor, the second threshold correction factor being used to correct the fourth threshold for the terminal with the second type of antenna structure.

In some embodiments of the present disclosure, in a case that the antenna structure of the terminal is the first type of antenna structure, the determining module 120 is configured to: obtain a first threshold corrected value based on the fourth threshold and the first threshold correction factor; in a case that the measurement value of the DL carrier is greater than or equal to the first threshold corrected value, determine that the uplink transmission is performed on the primary UL carrier; and in a case that the measurement value of the DL carrier is smaller than the first threshold corrected value, determine that the uplink transmission is performed on the SUL carrier.

In some embodiments of the present disclosure, in a case that the antenna structure of the terminal is the second type of antenna structure, the determining module 120 is configured to: obtain a second threshold corrected value based on the fourth threshold and the second threshold correction actor; in a case that the measurement value of the DL carrier is greater than or equal to the second threshold corrected value, determine that the uplink transmission is performed on the primary UL carrier; and in a case that the measurement value of the DL carrier is smaller than the second threshold corrected value, determine that the uplink transmission is performed on the SUL carrier.

In some embodiments of the present disclosure, the first determination module 110 is configured to: determine the decision parameter based on the antenna structure of the terminal and an agreement in a protocol; or determine the decision parameter based on the antenna structure of the terminal and a network signaling.

In some embodiments of the present disclosure, the terminal with the first type of antenna structure includes a RedCap terminal, and the terminal with the second type of antenna structure is different from the terminal with the first type of antenna structure.

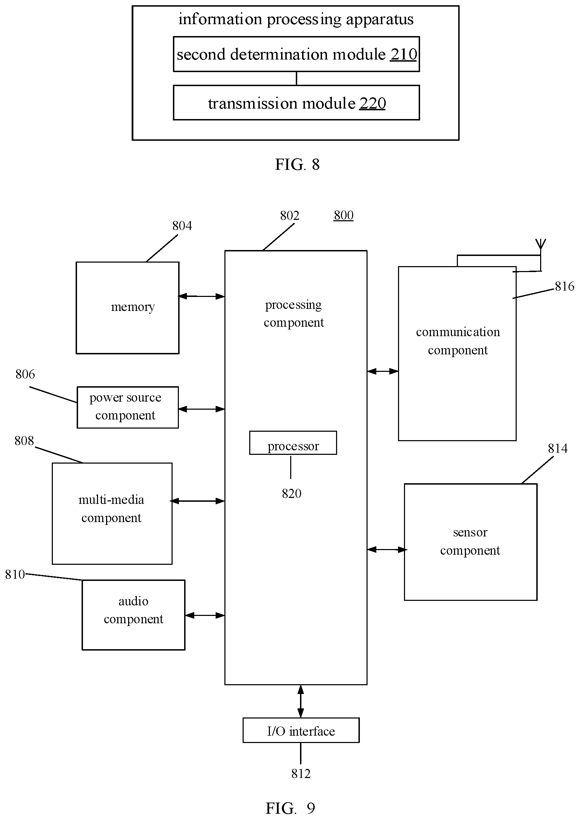

As shown in FIG. 8, the present disclosure provides in some embodiments an information processing apparatus, which includes a second determination module 210 and a transmission module 220.

The second determination module 210 is configured to determine a decision parameter based on an antenna structure of a terminal.

The transmission module 220 is configured to transmit a network signaling including the decision parameter. The decision parameter and a measurement value of a DL carrier are collectively used by the terminal to select to perform an uplink transmission on a primary UL carrier or an SUL carrier.

The information processing apparatus is included in a base station.

In some embodiments of the present disclosure, the second determination module 210 and the transmission module 220 may be program modules. The program module is executed by a processor to implement the above-mentioned operations.

In some other embodiments of the present disclosure, the second determination module 210 and the transmission module 220 may be a hardware-and-software module. The hardware-and-software module includes, but not limited to, a programmable array. The programmable array includes, but not limited to, a field programmable array and/or a complex programmable array.

In some other embodiments of the present disclosure, the second determination module 210 and the transmission module 220 may be a pure hardware module, which includes, but not limited to, an application-specific integrated circuit.

In some embodiments of the present disclosure, the uplink transmission includes random access and/or SDT.

The present disclosure further provides in some embodiments a communication device, which includes a memory storing therein a processor-executable instruction, and a processor coupled to the memory and configured to execute the above-mentioned information processing method.

The processor includes various types of storage mediums, and the storage medium is a non-temporary computer storage medium so that the communication device is capable of continuously memorizing information stored therein in a case that the communication device is powered off.

Here, the communication device includes a UE or a network element, and the network element may be any one of the above-mentioned first to fourth network elements.

The processor is coupled to the memory via a bus, and configured to read an executable program stored in the memory, so as to implement at least one of the methods in FIGS. 2 to 6.

FIG. 9 is a block diagram of a terminal 800 according to the embodiments of the present disclosure. For example, the terminal 800 is a mobile phone, a computer, a digital broadcasting terminal device, a message transceiver device, a game console, a flat-panel device, medical equipment, fitness equipment, or a personal digital assistant.

As shown in FIG. 9, the terminal 800 includes at least one component selected from the group consisting of a processing component 802, a memory 804, a power source component 806, a multi-media component 808, an audio component 810, an input/output (I/O) interface 812, a sensor component 814, and a communication component 816.

Generally, the processing component 802 controls an entire operation of the terminal 800, e.g., operations associated with display, phone call, data communication, camera operation and recording operation. The processing component 802 includes at least one processor 820 to execute an instruction, so as to implement all of, or a part of, the steps of the above-mentioned method. In addition, the processing component 802 includes at least one module for the interaction between the processing component 802 and the other component. For example, the processing component 802 includes a multi-media module for the interaction between the multi-media component 808 and the processing component 802.

The memory 804 is configured to store therein various types of data to support the operation of the terminal 800. Examples of such data include instructions for any application or method operated on the terminal 800, contact data, phonebook data, messages, pictures, video, etc. The memory 804 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source component 806 provides power to various components of the terminal 800. The power source component 806 may include a power management system, one or more power sources, and any other components associated with the generation, management and distribution of power in the terminal 800.

The multi-media component 808 includes a screen for providing an output interface between the terminal 800 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media component 808 includes a front-facing camera and/or a rear-facing camera. When the terminal 800 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operating mode, such as a call mode, a recording mode, and a voice recognition mode. The received audio signal may be further stored in the memory 804 or transmitted via the communication component 816. In some embodiments of the present disclosure, the audio component 810 further includes a speaker to output audio signals.

The I/O interface 812 provides an interface between the processing component 802 and peripheral interface modules, such as a keyboard, a click wheel, buttons, and the like. The buttons may include, but not limited to, a home button, a volume button, a starting button, and a locking button.

The sensor component 814 includes one or more sensors to provide status assessments about various aspects of the terminal 800. For example, the sensor component 814 may detect an open/closed status of the terminal 800, relative positioning of components, e.g., the display and the keypad, of the terminal 800, a change in a position of the terminal 800 or a component of the terminal 800, a presence or absence of user contact with the terminal 800, an orientation or an acceleration/deceleration of the terminal 800, and a change in a temperature of the terminal 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments of the present disclosure, the sensor component 814 may also include an accelerometer sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G or 3G, or a combination thereof. In an exemplary embodiment of the present disclosure, the communication component 816 receives a broadcast signal or broadcast associated information from an external broadcast management system via a broadcast channel. In an exemplary embodiment of the present disclosure, the communication component 816 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the terminal 800 may be implemented with one or more Application Specific Integrated Cir cuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components, for performing the above-mentioned method.

In the exemplary embodiment of the present disclosure, the present disclosure further provides a non-temporary computer-readable storage medium including an instruction, e.g., the memory 804 including the instruction. The instruction is executed by the processor 820 of the terminal 800 to generate the above-mentioned method. For example, the non-temporary computer-readable storage medium may be an ROM, Random Access Memory (RAM), a CD-ROM, a magnetic tape, a floppy disk, an optical data storage device, etc.

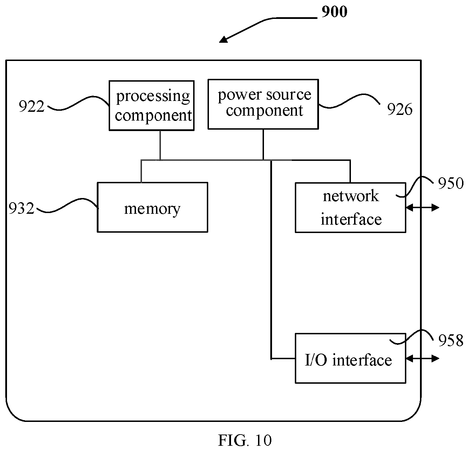

FIG. 10 shows a structure of an access device. For example, the communication device 900 may be the above-mentioned base station.

As shown in FIG. 10, the communication device 900 includes a processing component 922, which further includes one or more processors and memory resources represented by a memory 932 for storing therein instructions to be executed by the processing component 922, e.g., applications. The applications stored in the memory 932 may include one or more modules each corresponding to one group of instructions. In addition, the processing component 922 is configured to execute the instructions, so as to implement any method for the access device, e.g., the method in any of FIGS. 2 to 6.

The communication device 900 further includes a power source component 926 configured to performed power management over the network device 900, a wired or wireless network interface 950 configured to couple the network device 900 to a network, and an input/output (I/O) interface 958. The network device 900 may be based on an operating system stored in the memory 932, e.g., Windows Server ^{™}, Mac OS X^{™}, Unix ^{™}, Linux ^{™}, Free BSD^{™}, or the like.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. An information processing method, performed by a terminal, comprising:
determining a decision parameter based on an antenna structure of the terminal; and
determining that an uplink transmission is performed on a primary uplink (UL) carrier or a supplementary uplink (SUL) carrier based on the decision parameter and a measurement value of a downlink (DL) carrier.

2. The method of claim 1, wherein the determining that the uplink transmission is performed on the primary UL carrier or the SUL carrier based on the decision parameter and the measurement value of the DL carrier comprises:
determining that a random access is performed on the primary UL carrier or the SUL carrier based on the decision parameter and the measurement value of the DL carrier; or
determining that small data transmission (SDT) is performed on the primary UL carrier or the SUL carrier based on the decision parameter and the measurement value of the DL carrier.

3. The method of claim 1 or 2, wherein the determining the decision parameter based on the antenna structure of the terminal comprises:
in a case that the antenna structure of the terminal is a first type of antenna structure, determining that the decision parameter comprises a first threshold and a measurement correction factor, wherein the measurement correction factor is used to correct the measurement value of the DL carrier for the terminal; and
in a case that the antenna structure of the terminal is a second type of antenna structure, determining that the decision parameter comprises the first threshold,
wherein the first threshold is a shared threshold between the terminal with the first type of antenna structure and the terminal with the second type of antenna structure.

4. The method of claim 3, wherein in a case that the antenna structure of the terminal is the first type of antenna structure, the determining that the uplink transmission is performed on the primary UL carrier or the SUL carrier based on the decision parameter and the measurement value of the DL carrier comprises:
obtaining a corrected value of the DL carrier based on the measurement correction factor and the measurement value of the DL carrier;
in a case that the corrected value of the DL carrier is greater than or equal to the first threshold, determining that the uplink transmission is performed on the primary UL carrier; and
in a case that the corrected value of the DL carrier is smaller than the first threshold, determining that the uplink transmission is performed on the SUL carrier.

5. The method of claim 3 or 4, wherein the measurement correction factor comprises:
a first type of correction factor for correcting the measurement value of the DL carrier for random access and SDT; and
a second type of correction factor for correcting the measurement value of the DL carrier for random access or SDT.

6. The method of claim 3, wherein in a case that the antenna structure of the terminal is the second type of antenna structure, the determining that the uplink transmission is performed on the primary UL carrier or the SUL carrier based on the decision parameter and the measurement value of the DL carrier comprises:
in a case that the measurement value of the DL carrier is greater than or equal to the first threshold, determining that the uplink transmission is performed on the primary UL carrier; and
in a case that the measurement value of the DL carrier is smaller than the first threshold, determining that the uplink transmission is performed on the SUL carrier.

7. The method of claim 1 or 2, wherein the determining the decision parameter based on the antenna structure of the terminal comprises:
in a case that the antenna structure of the terminal is a first type of antenna structure, determining that the decision parameter comprises a second threshold; and
in a case that the antenna structure of the antenna is a second type of antenna structure, determining that the decision parameter comprises a third threshold.

8. The method of claim 7, wherein in a case that the antenna structure of the terminal is the first type of antenna structure, the determining that the uplink transmission is performed on the primary UL carrier or the SUL carrier based on the decision parameter and the measurement value of the DL carrier comprises:
in a case that the measurement value of the DL carrier is greater than or equal to the second threshold, determining that the uplink transmission is performed on the primary UL carrier; and
in a case that the measurement value of the DL carrier is smaller than the second threshold, determining that the uplink transmission is performed on the SUL carrier.

9. The method of claim 7, wherein in a case that the antenna structure of the terminal is the second type of antenna structure, the determining that the uplink transmission is performed on the primary UL carrier or the SUL carrier based on the decision parameter and the measurement value of the DL carrier comprises:
in a case that the measurement value of the DL carrier is greater than or equal to the third threshold, determining that the uplink transmission is performed on the primary UL carrier or the SUL carrier; and
in a case that the measurement value of the DL carrier is smaller than the third threshold, determining that the uplink transmission is performed on the SUL carrier.

10. The method of claim 1 or 2, wherein the determining the decision parameter based on the antenna structure of the terminal comprises:
in a case that the antenna structure of the terminal is a first type of antenna structure, determining that the decision parameter comprises a fourth threshold and a first threshold correction factor, wherein the first threshold correction factor is used to correct the fourth threshold for the terminal with the first type of antenna structure; and
in a case that the antenna structure of the terminal is a second type of antenna structure, determining that the decision parameter comprises the fourth threshold and a second threshold correction factor, wherein the second threshold correction factor is used to correct the fourth threshold for the terminal with the second type of antenna structure.

11. The method of claim 10, wherein in a case that the antenna structure of the terminal is the first type of antenna structure, the determining that the uplink transmission is performed on the primary UL carrier or the SUL carrier based on the decision parameter and the measurement value of the DL carrier comprises:
obtaining a first threshold corrected value based on the fourth threshold and the first threshold correction factor;
in a case that the measurement value of the **DL** carrier is greater than or equal to the first threshold corrected value, determining that the uplink transmission is performed on the primary UL carrier; and
in a case that the measurement value of the **DL** carrier is smaller than the first threshold corrected value, determining that the uplink transmission is performed on the SUL carrier.

12. The method of claim 10, wherein in a case that the antenna structure of the terminal is the second type of antenna structure, the determining that the uplink transmission is performed on the primary UL carrier or the SUL carrier based on the decision parameter and the measurement value of the **DL** carrier comprises:
obtaining a second threshold corrected value based on the fourth threshold and the second threshold correction actor;
in a case that the measurement value of the DL carrier is greater than or equal to the second threshold corrected value, determining that the uplink transmission is performed on the primary UL carrier; and
in a case that the measurement value of the DL carrier is smaller than the second threshold corrected value, determining that the uplink transmission is performed on the SUL carrier.

13. The method of claim 1 or 2, wherein the determining the decision parameter based on the antenna structure of the terminal comprises:
determining the decision parameter based on the antenna structure of the terminal and an agreement in a protocol; or
determining the decision parameter based on the antenna structure of the terminal and a network signaling.

14. The method of any one of claims 3 to 12, wherein a quantity of reception antennae in the first type of antenna structure is smaller than a quantity of reception antennae in the second type of antenna structure; and/or
a quantity of antenna elements in a single antenna panel in the first type of antenna structure is smaller than a quantity of antenna elements in a single antenna panel in the second type of antenna structure.

15. An information processing method, performed by a base station, comprising:
determining a decision parameter based on an antenna structure of a terminal; and
transmitting a network signaling comprising the decision parameter, wherein the decision parameter and a measurement value of a downlink (DL) carrier are collectively used by the terminal to select to perform an uplink transmission on a primary uplink (UL) carrier or a supplementary uplink (SUL) carrier.

16. The method of claim 15, wherein the uplink transmission comprises: random access; and/or SDT.

17. An information processing apparatus, comprising:
a first determination module, configured to determine a decision parameter based on an antenna structure of a terminal; and
a determining module, configured to determine that an uplink transmission is performed on a primary uplink (UL) carrier or a supplementary uplink (SUL) carrier based on the decision parameter and a measurement value of a downlink (DL) carrier.

18. The apparatus of claim 17, wherein the determining module is configured to determine that a random access is performed on the primary UL carrier or the SUL carrier based on the decision parameter and the measurement value of the DL carrier, or determine that small data transmission (SDT) is performed on the primary UL carrier or the SUL carrier based on the decision parameter and the measurement value of the DL carrier.

19. The apparatus of claim 17 or 18, wherein the first determination module is configured to:
in a case that the antenna structure of the terminal is a first type of antenna structure, determine that the decision parameter comprises a first threshold and a measurement correction factor, wherein the measurement correction factor is used to correct the measurement value of the DL carrier for the terminal; and
in a case that the antenna structure of the terminal is a second type of antenna structure, determine that the decision parameter comprises the first threshold,
wherein the first threshold is a shared threshold between the terminal with the first type of antenna structure and the terminal with the second type of antenna structure.

20. The apparatus of claim 19, wherein in a case that the antenna structure of the terminal is the first type of antenna structure, the determining module is configured to:
obtain a corrected value of the DL carrier based on the measurement correction factor and the measurement value of the DL carrier;
in a case that the corrected value of the DL carrier is greater than or equal to the first threshold, determine that the uplink transmission is performed on the primary UL carrier; and
in a case that the corrected value of the DL carrier is smaller than the first threshold, determine that the uplink transmission is performed on the SUL carrier.

21. The apparatus of claim 19 or 20, wherein the measurement correction factor comprises:
a first type of correction factor for correcting the measurement value of the DL carrier for random access and SDT; and
a second type of correction factor for correcting the measurement value of the DL carrier for random access or SDT.

22. The apparatus of claim 19, wherein in a case that the antenna structure of the terminal is the second type of antenna structure, the determining module is configured to:
in a case that the measurement value of the DL carrier is greater than or equal to the first threshold, determine that the uplink transmission is performed on the primary UL carrier; and
in a case that the measurement value of the DL carrier is smaller than the first threshold, determine that the uplink transmission is performed on the SUL carrier.

23. The apparatus of claim 17 or 18, wherein the first determination module is configured to:
in a case that the antenna structure of the terminal is a first type of antenna structure, determine that the decision parameter comprises a second threshold; and
in a case that the antenna structure of the antenna is a second type of antenna structure, determine that the decision parameter comprises a third threshold.

24. The apparatus of claim 23, wherein in a case that the antenna structure of the terminal is the first type of antenna structure, the determining module is configured to:
in a case that the measurement value of the DL carrier is greater than or equal to the second threshold, determine that the uplink transmission is performed on the primary UL carrier; and
in a case that the measurement value of the DL carrier is smaller than the second threshold, determine that the uplink transmission is performed on the SUL carrier.

25. The apparatus of claim 23, wherein in a case that the antenna structure of the terminal is the second type of antenna structure, the determining module is configured to:
in a case that the measurement value of the DL carrier is greater than or equal to the third threshold, determine that the uplink transmission is performed on the primary UL carrier or the SUL carrier; and
in a case that the measurement value of the DL carrier is smaller than the third threshold, determine that the uplink transmission is performed on the SUL carrier.

26. The apparatus of claim 17 or 18, wherein the first determination module is configured to:
in a case that the antenna structure of the terminal is a first type of antenna structure, determine that the decision parameter comprises a fourth threshold and a first threshold correction factor, wherein the first threshold correction factor is used to correct the fourth threshold for the terminal with the first type of antenna structure; and
in a case that the antenna structure of the terminal is a second type of antenna structure, determine that the decision parameter comprises the fourth threshold and a second threshold correction factor, wherein the second threshold correction factor is used to correct the fourth threshold for the terminal with the second type of antenna structure.

27. The apparatus of claim 26, wherein in a case that the antenna structure of the terminal is the first type of antenna structure, the determining module is configured to:
obtain a first threshold corrected value based on the fourth threshold and the first threshold correction factor;
in a case that the measurement value of the DL carrier is greater than or equal to the first threshold corrected value, determine that the uplink transmission is performed on the primary UL carrier; and
in a case that the measurement value of the DL carrier is smaller than the first threshold corrected value, determine that the uplink transmission is performed on the SUL carrier.

28. The apparatus of claim 26, wherein in a case that the antenna structure of the terminal is the second type of antenna structure, the determining module is configured to:
obtain a second threshold corrected value based on the fourth threshold and the second threshold correction actor;
in a case that the measurement value of the DL carrier is greater than or equal to the second threshold corrected value, determine that the uplink transmission is performed on the primary UL carrier; and
in a case that the measurement value of the DL carrier is smaller than the second threshold corrected value, determine that the uplink transmission is performed on the SUL carrier.

29. The apparatus of claim 17 or 18, wherein the first determination module is configured to:
determine the decision parameter based on the antenna structure of the terminal and an agreement in a protocol; or
determine the decision parameter based on the antenna structure of the terminal and a network signaling.

30. The apparatus of any one of claims 19 to 29, wherein a quantity of reception antennae in the first type of antenna structure is smaller than a quantity of reception antennae in the second type of antenna structure; and/or
a quantity of antenna elements in a single antenna panel in the first type of antenna structure is smaller than a quantity of antenna elements in a single antenna panel in the second type of antenna structure.

31. An information processing apparatus, comprising:
a second determination module, configured to determine a decision parameter based on an antenna structure of a terminal; and
a transmission module, configured to transmit a network signaling comprising the decision parameter, wherein the decision parameter and a measurement value of a downlink (DL) carrier are collectively used by the terminal to select to perform an uplink transmission on a primary uplink (UL) carrier or a supplementary uplink (SUL) carrier.

32. The apparatus of claim 31, wherein the uplink transmission comprises: random access; and/or SDT.

33. A communication device, comprising a processor, a transceiver, a memory, and an executable program stored in the memory and executed by the processor, wherein the processor is configured to execute the executable program to implement the information processing method of any one of claims 1 to 14 or the information processing method of claim 15 or 16.

34. A computer storage medium storing therein an executable program, wherein the executable program is executed by a processor to implement the information processing method of any one of claims 1 to 14 or the information processing method of claim 15 or 16.
